# FASCICULE DE BREVET EUROPEEN

(11) **EP 3 752 719 B1**
(45) Date de publication et mention de la délivrance du brevet: **15.02.2023**
(21) Numéro de dépôt: 19716971.7
(22) Date de dépôt: 20.03.2019
(51) Int. Cl.: F01D 25/16, F01D 25/18, B22F 3/105, B22F 5/00

(54) **SUPPORT DE PALIER DE TURBOREACTEUR OBTENU PAR FABRICATION ADDITIVE**
DURCH GENERATIVE FERTIGUNG HERGESTELLTER TRÄGER FÜR EINE STRAHLTURBINE
TURBOJET BEARING SUPPORT PRODUCED BY ADDITIVE MANUFACTURING

(30) Priorité: 23.03.2018 FR 1852557
(43) Date de publication de la demande: 23.12.2020
(73) Titulaire: SAFRAN AIRCRAFT ENGINES, 75015 Paris (FR)
(72) Inventeur: MARQUIE, Dimitri, Daniel, Gabriel, 77550 Moissy-Cramayel (FR); FABRE, Adrien, Jacques, Philippe, 77550 Moissy-Cramayel (FR); PATARD, Frédéric, 77550 Moissy-Cramayel (FR); METGE, Pierre, Jean-Baptiste, 77550 Moissy-Cramayel (FR)
(74) Mandataire: Brevalex
(86) Numéro de dépôt international: PCT/FR2019/050630
(87) Numéro de publication internationale: WO 2019/180375

(56) Documents cités:
- EP-A1- 3 214 273
- FR-A1- 3 053 728
- US-A1- 2014 174 858
- US-A1- 2015 224 743
- US-A1- 2015 308 502
- US-A1- 2016 290 164

## Description

### DOMAINE TECHNIQUE

La présente invention concerne la formation d'un support de palier de moteur d'aéronef par fabrication additive.

### CONTEXTE GENERAL DE L'INVENTION

Un turboréacteur à double flux comporte une manche d'entrée recevant l'air en amont qui est aspiré par un compresseur basse pression, avant d'être divisé en un flux primaire central et un flux secondaire entourant le flux primaire. Après avoir passé le compresseur basse pression, le flux secondaire est propulsé vers l'aval pour générer une poussée en étant soufflé autour du flux primaire, l'amont et l'aval étant définis par rapport au sens d'écoulement de fluide dans le turboréacteur.

Après avoir passé le compresseur basse pression, le flux primaire traverse un compresseur haute pression avant d'atteindre une chambre de combustion. Ce flux primaire est ensuite détendu dans une turbine haute pression liée en rotation avec le compresseur haute pression, puis dans une turbine basse pression liée en rotation au compresseur basse pression, avant d'être expulsé vers l'aval.

Dans le cas d'un turboréacteur double corps, le compresseur haute pression et la turbine haute pression font partie d'un corps haute pression qui entoure un tourillon basse pression en tournant à une vitesse différente de celui-ci, ce tourillon basse pression portant le compresseur basse pression et la turbine basse pression.

Le tourillon basse pression et le corps haute pression sont portés en amont et en aval, par des paliers logés dans des enceintes les isolant du reste du moteur. Chaque palier est lubrifié par de l'huile circulant dans l'enceinte qui l'entoure, et qui est délimitée par des éléments fixes et par l'élément rotatif qui la traverse. Un tel palier est porté par un support tout en étant entouré par l'enceinte.

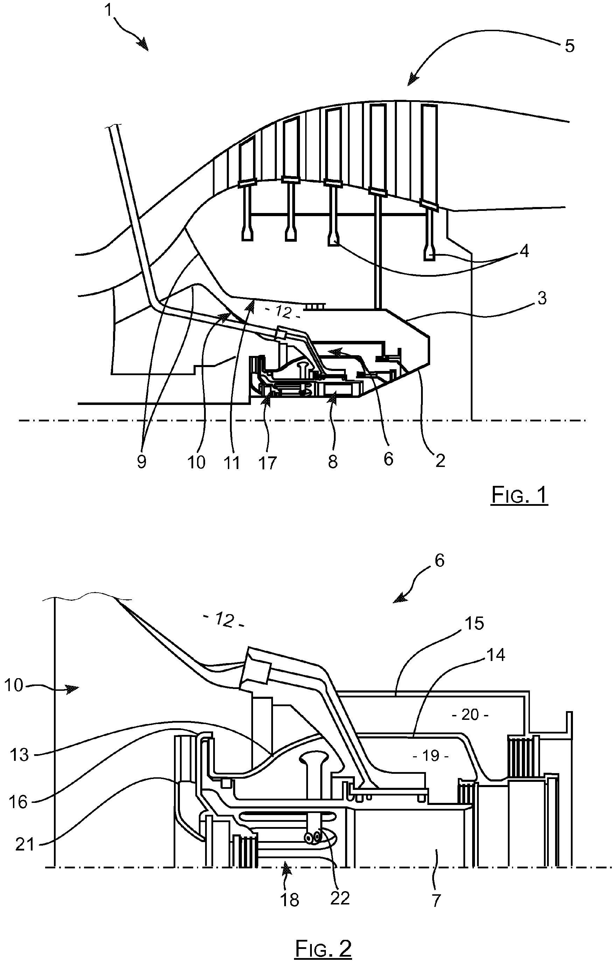

La figure 1 montre selon une possibilité de conception que l'invention se propose d'améliorer, une section d'une partie d'un turboréacteur 1 fait apparaître un tourillon basse pression 2, à l'extrémité aval duquel est solidarisée une virole 3 qui s'étend radialement pour être solidarisée à des disques 4 d'une turbine basse pression 5 s'étendant autour d'une portion aval du tourillon 2.

Le tourillon 2 est entouré dans sa région aval par un support de palier 6 qui porte un manchon 7 destiné à recevoir un roulement à rouleaux 8 pour supporter la partie aval du tourillon 2, et qui est solidarisé à un élément fixe 9 du moteur situé à son amont, par l'intermédiaire d'un cône 10. Ce cône 10 s'évase depuis sa portion aval où il est solidarisé au support 6, vers sa portion amont où il est solidarisé à l'élément fixe 9.

Le cône 10 est entouré par un élément cylindrique 11 solidarisé à sa portion amont qu'il prolonge vers l'aval, pour délimiter avec ce cône 10 et avec la virole 3 une portion d'une enceinte 12 renfermant le palier.

Comme visible sur la figure 2, une jupe 13 et deux organes de révolution 14 et 15 prolongent la région centrale du cône 10 respectivement vers l'amont et vers l'aval, cette jupe et ces organes ayant des diamètres externes de l'ordre du diamètre interne du cône 10. Un support amont 16 comportant une couronne par laquelle il est fixé à l'amont de la jupe 13 porte un joint radial segmenté 17 qui délimite une enceinte 18 en amont du roulement 8. L'élément de révolution 14 délimite conjointement avec le tourillon 2 deux enceintes concentriques 19 et 20 situées en aval du roulement 8.

Compte tenu des contraintes de fabrication et de montage liées aux techniques connues, ces composants, à savoir le support 6, le cône 10, l'élément cylindrique 11 la jupe 13, l'élément 14 et le support amont 16 sont fixés les uns aux autres selon différents procédés incluant notamment le soudage TIG.

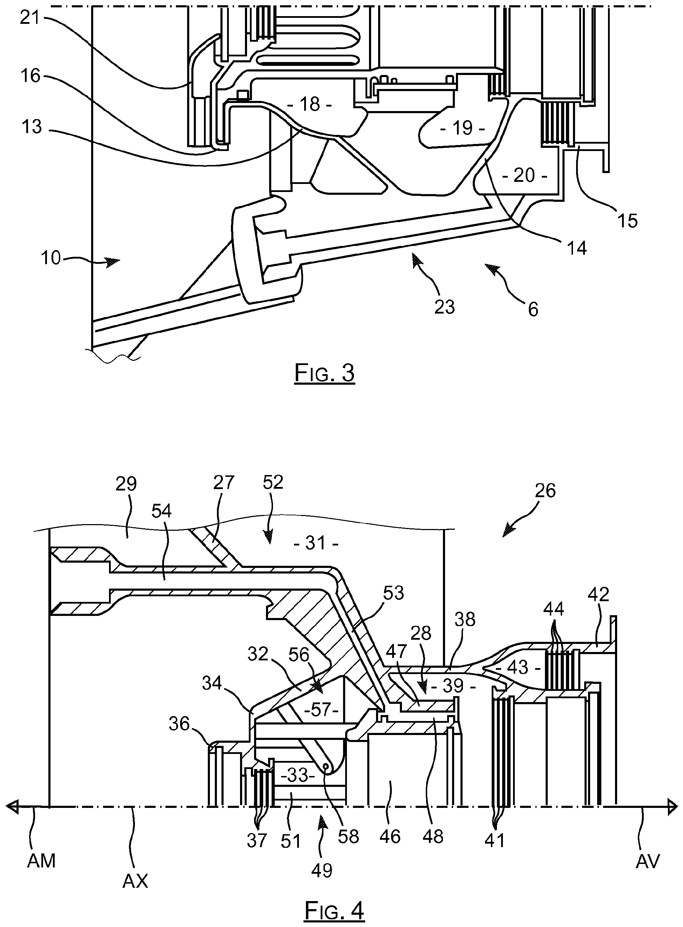

Comme visible de manière plus détaillée sur la figure 3, le manchon 7 comporte une portion principale cylindrique engagée dans la région centrale du cône 10, et cette portion principale est prolongée par une portion en cage d'écureuil par l'intermédiaire de laquelle ce manchon 7 est rigidement solidarisé à une extrémité amont de la jupe 13.

Complémentairement, un espace annulaire s'étendant entre le manchon 7 et la portion centrale du cône 10 est pressurisé hydrauliquement, pour contraindre radialement le manchon 7 afin d'assurer qu'il serre la bague externe du roulement qu'il reçoit lorsque le moteur est en service. Un tel agencement, encore dénommé à amortisseur de compression ou « *squeeze film* », est décrit dans le document de brevet EP1650449.

Le joint radial segmenté 17 a sa face amont qui est couverte par un flasque de révolution 21 à bord interne conique permettant d'introduire une perte de charge en amont de ce joint 17.

Complémentairement, un gicleur 22 visible sur la figure 2 s'étend radialement pour introduire de l'huile dans l'enceinte 18 pour refroidir le joint 17 et lubrifier le roulement 8. Cette huile est collectée par un chemin de retour 23 visible sur la figure 3 mettant en communication les portions inférieures des enceintes 18, 19 et 20, avec un ou des éléments non représentés pour assurer sa circulation et son refroidissement.

Une conception telle que celle des figures 1 à 3 résulte de solutions de conception et de fabrication que l'invention se propose d'améliorer. D'une manière générale, la conception et la fabrication d'un support de palier sont des opérations complexes et coûteuses impliquant une multiplicité de processus. D'autres supports de palier selon l'art antérieur sont connus des publications EP 3 214 273 A1 et US 2016/290164 A1.

Le but de l'invention est d'apporter une solution pour remédier à cet inconvénient.

### EXPOSÉ DE L'INVENTION

A cet effet, l'invention a pour objet un support de palier selon la revendication 1.

Cette solution de conception et de fabrication permet de réduire l'encombrement et la masse du support de palier en supprimant notamment les éléments de liaison boulonnées. Elle permet également de réduire cette masse du fait que la tenue à la fatigue du matériau issu de fusion laser est supérieure à celle du matériau issu de fonderie, ce qui permet de réduire la quantité de matière constituant le support de palier en réduisant notamment son épaisseur en différents points.

L'invention concerne également un support de palier ainsi défini, comportant un support amont de joint radial segmenté prolongeant la jupe amont.

L'invention concerne également un support de palier ainsi défini, comportant un gicleur dépassant d'une face interne de la jupe amont dans l'enceinte amont pour refroidir et lubrifier l'enceinte amont.

L'invention concerne également un support de palier ainsi défini, comportant un manchon destiné à recevoir une bague externe de roulement à rouleaux entourant le tourillon, ce manchon étant entouré par la portion centrale, et dans lequel le manchon est prolongé par une cage d'écureuil par laquelle il est rigidement solidarisé à une extrémité amont de la jupe amont.

L'invention concerne également un support de palier ainsi défini, dans lequel le manchon est espacé radialement de la portion centrale qui l'entoure pour délimiter un espace annulaire destiné à recevoir un flux hydraulique.

L'invention concerne également un support de palier ainsi défini, comprenant un canal d'alimentation de l'espace annulaire entourant le manchon, ce canal traversant l'élément conique.

L'invention concerne également un support de palier ainsi défini, comprenant un chemin de retour d'huile relié à l'enceinte amont et/ou à l'enceinte aval par l'intermédiaire d'un collecteur, ce chemin de retour d'huile traversant l'élément conique.

L'invention a également pour objet un turboréacteur comportant un support de palier ainsi défini.

### BRÈVE DESCRIPTION DES DESSINS

- La figure 1 déjà décrite est une vue schématique en coupe d'une section d'une partie aval d'un turboréacteur ;
- La figure 2 déjà décrite est une vue en coupe d'une portion de section de partie aval d'un turboréacteur ;
- La figure 3 déjà décrite est une demi-vue en coupe du support palier ;
- La figure 4 est une demi-vue en coupe du support palier selon l'invention ;
- La figure 5 est une vue partielle en perspective de l'intérieur de l'enceinte amont du support de palier selon l'invention qui comporte un gicleur ;
- La figure 6 est une vue en coupe de la moitié inférieure du support de palier selon l'invention comportant un chemin de retour d'huile ;
- La figure 7 est une représentation en perspective d'une distribution de matière pour un support de palier selon l'invention.

### EXPOSÉ DÉTAILLÉ DE MODES DE RÉALISATION PARTICULIERS

L'idée à la base de l'invention est de former par fabrication additive l'ensemble du support de palier incluant le cône avec sa portion centrale de supportage du tourillon ainsi que l'élément cylindrique prolongeant et entourant ce cône, avec la jupe amont et les éléments de révolution aval qui délimitent les enceintes entourant la portion centrale.

En pratique, l'invention permet d'intégrer trois fonctions directement dans la pièce brute constituant le support de palier, à savoir une cage d'écureuil et un manchon maintenu par celle-ci, un support de joint radial segmenté, et un amortisseur de compression pour le manchon ainsi que d'autres fonctions additionnelles détaillées dans la suite.

Le support de palier selon l'invention qui apparaît sur la figure 4, où il est repéré par 26 comporte un cône 27 qui s'évase vers l'amont depuis une portion centrale de révolution 28 vers une portion non visible de solidarisation à un élément fixe située au niveau du bord de plus grand diamètre de cet élément conique 27.

Ce support 26 a une forme globale de révolution autour d'un axe AX correspondant à l'axe longitudinal du moteur dans lequel il est destiné à être monté, et il est orienté de telle manière que le cône 27 s'ouvre ou s'évase vers l'amont AM du moteur et se resserre vers l'aval AV du moteur par rapport au sens d'avancement du moteur en service.

Ce cône est entouré par un organe cylindrique ou cylindre 29 qui prolonge vers l'aval son bord de plus grand diamètre, pour délimiter avec ce cône 27 une portion amont d'une enceinte périphérique 31. Ce support de palier 26 comporte une jupe amont 32 portée par le cône 27 pour délimiter une enceinte amont 33 de la portion centrale 28, cette jupe ayant une forme conique se réduisant depuis le cône 27 qui la porte vers une extrémité amont 34 de cette jupe.

L'extrémité amont 34 de la jupe est prolongée par un support amont 36 destiné à recevoir un joint radial segmenté non représenté sur la figure 4, assurant au niveau de l'amont de l'enceinte 33 une étanchéité entre le support de palier et le tourillon rotatif non représenté. Complémentairement, ce support amont 36 comporte à sa face interne, en aval de la portion de réception du joint radial segmenté, des léchettes 37 destinées à compléter l'étanchéité apportée par le joint radial segmenté, ces léchettes étant au contact d'une face externe de révolution du tourillon non représenté.

Ce support de palier 26 comporte dans sa portion aval un premier élément de révolution 38 porté par le cône 27, sous forme d'une paroi qui entoure la portion centrale 28 tout en se rétrécissant vers l'aval, en délimitant une première enceinte aval 39. Ce premier élément de révolution porte à sa face interne des léchettes 41 venant au contact d'une face externe du tourillon non représenté pour assurer une étanchéité de l'aval de l'enceinte 39.

Un second élément de révolution 42 est porté par le premier élément de révolution 38, en constituant une autre paroi de révolution qui s'évase vers l'aval pour délimiter une seconde enceinte aval 43. Ce second élément de révolution porte à sa face interne des léchettes 44 venant au contact d'une face externe du tourillon non représenté pour assurer une étanchéité de l'aval de l'enceinte 39.

Ce support 26 comporte à l'intérieur de sa portion centrale 28 un manchon 46 destiné à recevoir une bague externe non représentée d'un roulement à rouleaux entourant le tourillon non représenté que ce support 26.

Plus particulièrement, la portion centrale 28 comprend un élément annulaire 47 prolongeant le cône 27, et le manchon 46 s'étend à l'intérieur de l'élément annulaire 47 tout en étant espacé radialement ce celui-ci par un espace annulaire repéré par 48. Le manchon 46 n'est pas relié directement à l'élément annulaire 47 de manière à bénéficier d'une mobilité radiale par rapport à cet élément annulaire 47, ce manchon ayant ainsi un montage souple.

Complémentairement, un anneau intercalaire non représenté peut être prévu pour être engagé dans l'espace annulaire 48, de manière à en améliorer l'étanchéité et la circulation hydraulique.

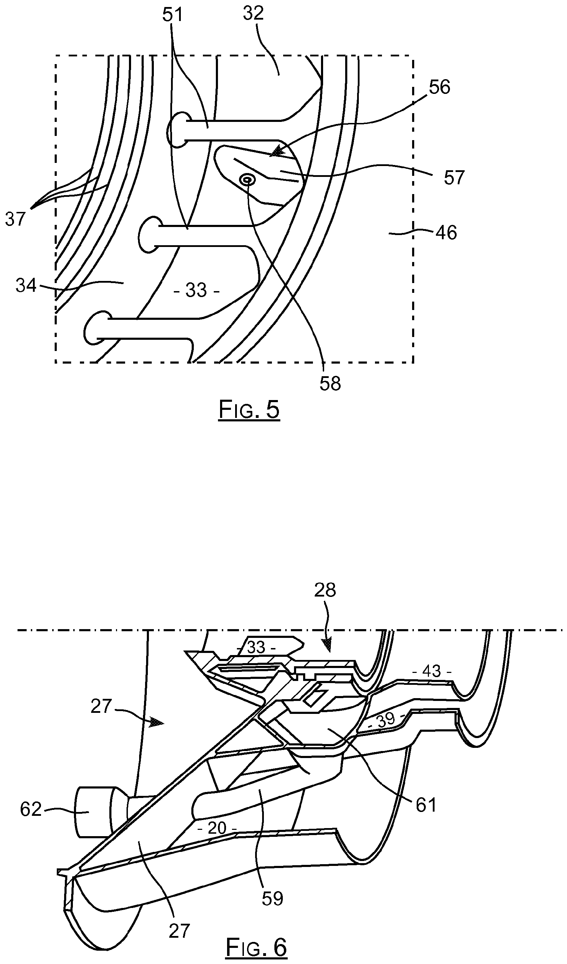

Comme visible sur la figure 4, l'extrémité amont de ce manchon 46 est prolongée par une structure de cage d'écureuil 49 par l'intermédiaire de laquelle le manchon 46 est raccordé à l'extrémité amont 34 de la jupe 32. Le maintien du manchon 46 est assuré uniquement par la cage d'écureuil 49. Comme visible sur les figures 4 et 5, la structure de cage d'écureuil 49 est formée principalement d'une série de colonnettes 51 orientées parallèlement à l'axe AX en étant régulièrement espacées les unes des autres autour de cet axe.

Cette cage d'écureuil par l'intermédiaire de laquelle le manchon est relié au reste du support de palier permet d'assurer un maintien souple du palier par rapport au reste du support, les ajourements séparant ses colonnettes lui confèrent une rigidité significativement inférieure aux autres parties du support qui sont pleines.

Comme visible sur la figure 4, le support de palier 26 fabriqué d'un seul tenant intègre également un canal 52 d'alimentation en huile de l'espace annulaire 48, de manière à former un « *squeeze film* » tel que détaillé dans le document de brevet EP1650449.

Ce canal 52 comporte une portion aval 53 situé à l'aval du cône 27, d'orientation radiale et qui est directement raccordée à l'espace annulaire 48, et une portion amont 54 orientée parallèlement à l'axe AX, qui traverse le cône 27 de manière à être raccordée à un organe d'alimentation hydraulique non représenté.

Comme il ressort de la figure 4, l'enceinte amont 33 est traversée par les colonnettes 51 sans que celles-ci ne la séparent en plusieurs parties.

Complémentairement, la jupe 32 porte à sa face interne un gicleur 56 orienté vers l'axe de révolution AX, comportant un corps 57 qui s'étend radialement vers l'axe AX entre deux colonnettes 51 se terminant par une buse 58. Cette buse 58 est ainsi située radialement en région centrale de l'enceinte 33, et radialement entre le joint radial segmenté et le roulement à rouleaux. Cette buse 58 peut ainsi diffuser dans l'enceinte 33 de l'huile pour refroidir le joint radial segmenté et lubrifier le roulement à rouleaux.

Le corps 57 du gicleur s'étend entre deux colonnettes pour constituer un arrêt en rotation de la cage et de blocage en rotation de cette cage en cas de rupture de colonnettes.

Comme visible sur la figure 6, le support de palier 26 formé d'une seule pièce issue de fabrication additive comporte également un chemin de retour d'huile intégré 59 visible sur la figure 6. Ce chemin a une forme générale de canal tubulaire d'orientation sensiblement parallèle à l'axe AX. Ce chemin 59 s'étend depuis un collecteur 61 situé en aval du cône 27, et dans lequel débouchent l'enceinte amont 33 et la première enceinte aval 39, et il traverse le cône 27 pour présenter une extrémité amont 62 située sensiblement au droit de la portion de fixation du support de palier 26. En pratique, l'intégration de ce chemin de retour d'huile à même le support de palier produit par fabrication additive permet de se dispenser d'un perçage qui devait être réalisé par perçage vibratoire dans l'Etat de la technique.

D'une manière générale, le recours à la fabrication additive permet d'optimiser significativement la masse du support de palier selon l'invention, du fait que la tenue à la fatigue du matériau produit par fabrication additive est supérieure à la tenue à la fatigue des matériaux classiques tels qu'issus de fonderie, de forgeage ou d'usinage.

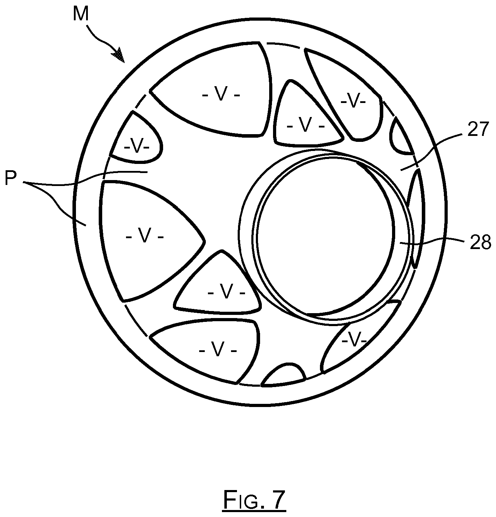

A titre d'exemple, la figure 7 montre le produit d'une simulation numérique déterminant la distribution ou la topologie de la matière pour former le support de palier par rapport aux efforts et cycles de sollicitation qu'il subit, sans prendre en compte les contraintes fonctionnelles supplémentaires du type étanchéité et autres.

Le modèle obtenu repéré par M, qui décrit une partie du support de palier 26 comprenant son cône 27, face de fixation, et sa portion centrale 28, comporte des parties pleines P et des parties vides, repérées par V qui correspondent à des écopes de ventilation non représentées sur les autres figures.

D'une manière plus générale, il ressort de cette modélisation M que le support de palier fini, conçu pour et issu de fabrication additive comporte moins de matière que le support de palier de l'Etat de la technique consistant en un assemblage de pièces forgées et moulées, permettant autrement dit un gain de masse significatif.

En ce qui concerne les léchettes 37, 41, 44, elles sont formées dans un matériau abradable différent du matériau formant le reste du support de palier. Ces léchettes peuvent être formées avec le reste du support de palier par fabrication additive en faisant varier la composition des poudres déposées localement au niveau de ces léchettes de manière à y constituer localement un matériau abradable.

## Revendications

1. Support de palier (26), destiné à être solidarisé à un élément fixe de turboréacteur pour supporter un tourillon, le support de palier (26) comportant:
- un élément conique (27) qui s'évase depuis une portion centrale (28) de supportage du tourillon vers une portion de solidarisation à l'élément fixe ;
- une jupe amont (32) portée par l'élément conique pour délimiter une enceinte amont (33) pour la portion centrale (28) ; et
- au moins un élément de révolution aval (38, 42) porté par l'élément conique (27) pour délimiter une enceinte aval (39, 43) pour la portion centrale (28) ;
**caractérisé en ce que**
le support de palier comprend un organe cylindrique (29) prolongeant la portion de solidarisation à l'élément fixe tout en entourant l'élément conique (27);
et **en ce que** ce support de palier (26) est fabriqué en une seule pièce obtenue par fabrication additive.

2. Support de palier (26) selon la revendication 1, comportant un support amont (36) de joint radial segmenté prolongeant la jupe amont (32).

3. Support de palier (26) selon la revendication 1 ou 2, comportant un gicleur (56) dépassant d'une face interne de la jupe amont (32) dans l'enceinte amont (33) pour refroidir et lubrifier l'enceinte amont (33).

4. Support de palier (26) selon l'une des revendications 1 à 3, comportant un manchon (46) destiné à recevoir une bague externe de roulement à rouleaux entourant le tourillon, ce manchon (46) étant entouré par la portion centrale (28), et dans lequel le manchon (46) est prolongé par une cage d'écureuil (49) par laquelle il est rigidement solidarisé à une extrémité amont (34) de la jupe amont (32).

5. Support de palier (26) selon la revendication 4, dans lequel le manchon (46) est espacé radialement de la portion centrale (28) qui l'entoure pour délimiter un espace annulaire (48) destiné à recevoir un flux hydraulique.

6. Support de palier (26) selon la revendication 5, comprenant un canal (52) d'alimentation de l'espace annulaire (48) entourant le manchon (46), ce canal (52) traversant l'élément conique (27).

7. Support de palier (26) selon l'une des revendications précédentes, comprenant un chemin de retour d'huile (59) relié à l'enceinte amont et/ou à l'enceinte aval par l'intermédiaire d'un collecteur (61), ce chemin de retour d'huile (59) traversant l'élément conique (27).

8. Turboréacteur comportant un support de palier (26) tel que défini dans l'une des revendications précédentes.

## Patentansprüche

1. Träger (26), der zur Verbindung mit einem feststehenden Strahlturbinenelement zur Abstützung eines Lagerzapfens ausgelegt ist, wobei der Träger (26) Folgendes aufweist:
- ein konisches Element (27), das sich von einem mittigen Abschnitt (28) zur Abstützung des Lagerzapfens in Richtung eines Befestigungsabschnitts mit dem feststehenden Element aufweitet,
- eine stromaufwärts gelegene Schürze (27), die von dem konischen Element getragen wird, um ein stromaufwärts gelegenes Gehäuse (33) für den mittigen Abschnitt (28) zu begrenzen; sowie
- mindestens ein stromabwärts gelegenes Rotationselement (38, 42), das von dem konischen Element (27) getragen wird, um ein stromabwärts gelegenes Gehäuse (39, 43) für den mittigen Abschnitt (28) zu begrenzen;
**dadurch gekennzeichnet, dass** der Träger ein zylindrisches Teil (29) aufweist, das den Befestigungsabschnitt mit dem feststehenden Element verlängert und dabei das konische Element (27) umgibt;
und dass der Träger (26) aus einem einzigen, durch additive Fertigung erhaltenen Stück gefertigt ist.

2. Träger (26) nach Anspruch 1, mit einer stromaufwärts gelegenen Abstützung (36) für eine segmentierte radiale Dichtung zur Verlängerung der stromaufwärts gelegenen Schürze (32).

3. Träger (26) nach Anspruch 1 oder 2, mit einer Düse (56), die von einer Innenfläche der stromaufwärts gelegenen Schürze (32) in das stromaufwärts gelegene Gehäuse (33) ragt, um das stromaufwärts gelegene Gehäuse (33) abzukühlen und zu schmieren.

4. Träger (26) nach einem der Ansprüche 1 bis 3, mit einer Hülse (46) zum Aufnehmen eines äußeren Lagerrings mit den Lagerzapfen umgebenden Rollen, wobei die Hülse (46) von dem mittigen Abschnitt (28) umgeben ist, und wobei die Hülse (46) durch einen Käfigläufer (49) verlängert ist, durch welchen sie starr mit einem stromaufwärts gelegen Ende (34) der stromaufwärts gelegenen Schürze (32) verbunden ist.

5. Träger (26) nach Anspruch 4, wobei die Hülse (46) radial von dem mittigen Abschnitt (28) beabstandet ist, welcher sie zur Abgrenzung eines ringförmigen Raums (48) umgibt, welcher zur Aufnahme eines Hydraulikflusses ausgelegt ist.

6. Träger (26) nach Anspruch 5, mit einem Kanal (52) zur Versorgung des die Hülse (46) umgebenden, ringförmigen Raums (48), wobei der Kanal (52) durch das konische Element (27) verläuft.

7. Träger (26) nach einem der vorhergehenden Ansprüche, mit einem Ölrücklaufweg (59), der mit dem stromaufwärts gelegenen Gehäuse und/oder mit dem stromabwärts gelegenen Gehäuse über einen Sammelbehälter (61) verbunden ist, wobei der Ölrücklaufweg (59) durch das konische Element (27) verläuft.

8. Strahlturbine mit einem Träger (26) wie in einem der vorhergehenden Ansprüche definiert.

## Claims

1. Bearing support (26), intended to be secured to a stationary turbojet element for supporting a journal, the bearing support (26) comprising:
- a tapered element (27) which widens from a central portion (28) for supporting the journal to a portion for securing to the stationary element;
- an upstream skirt (32) carried by the tapered element for defining an upstream enclosure (33) for the central portion (28); and
- at least one downstream revolution element (38, 42) carried by the tapered element (27) for defining a downstream enclosure (39, 43) for the central portion (28);
**characterized in that** this bearing support (26) comprises a cylindrical body (29) extending the portion for securing to the stationary element while surrounding the tapered element (27), and **in that** this bearing support (26) is made as a single part produced by additive manufacturing.

2. Bearing support (26) according to claim 1, including an upstream support (36) for a segmented radial seal extending the upstream skirt (32).

3. Bearing support (26) according to claim 1 or 2, including a nozzle (56) protruding from an inner face of the upstream skirt (32) in the upstream enclosure (33) to cool and lubricate the upstream enclosure (33).

4. Bearing support (26) according to one of claims 1 to 3, including a sleeve (46) intended to receive an outer roller bearing ring surrounding the journal, this sleeve (46) being surrounded by the central portion (28), and wherein the sleeve (46) is extended by a squirrel cage (49) through which it is rigidly secured to an upstream end (34) of the upstream skirt (32).

5. Bearing support (26) according to claim 4, wherein the sleeve (46) is radially spaced from the central portion (28) that surrounds it to define an annular space (48) intended to receive a hydraulic flow.

6. Bearing support (26) according to claim 5, comprising a feed channel (52) of the annular space (48) surrounding the sleeve (46), this channel (52) passing through the tapered element (27).

7. Bearing support (26) according to one of the preceding claims, comprising an oil return path (59) connected to the upstream enclosure and/or to the downstream enclosure via a manifold (61), this oil return path (59) passing through the tapered element (27).

8. Turbojet including a bearing support (26) such as defined in one of the preceding claims.
